# EUROPEAN PATENT SPECIFICATION

(11) **EP 0 894 719 B1**
(45) Date of publication and mention of the grant of the patent: **03.03.2004**
(21) Application number: 98114557.6
(22) Date of filing: 03.08.1998
(51) Int. Cl.: B65B 19/10, B65B 19/24

(54) **Machine for packing groups of cigarettes**
Vorrichtung zum Verpacken von Zigarettengruppen
Machine pour emballer des groupes de cigarettes

(30) Priority: 01.08.1997 IT BO970478
(43) Date of publication of application: 03.02.1999
(73) Proprietor: G.D SOCIETA' PER AZIONI, 40133 Bologna (BO) (IT)
(72) Inventor: DRAGHETTI, Fiorenzo, 40059 MEDICINA (IT); SPATAFORA, Mario, 40100 BOLOGNA (IT)
(74) Representative: Prato, Roberto

(56) References cited:
- FR-A- 2 395 896

## Description

The present invention relates to a machine for packing groups of cigarettes.

British Patent No. 2,138,382 relates to a machine for packing groups of cigarettes, which comprises a cigarette hopper with at least two outlets for respective groups of cigarettes; step-operated first conveying means, in turn comprising a pocket conveyor belt looped about two transmission pulleys defining, on the conveyor belt, an unloading branch and a loading branch extending in front of the hopper outlets, and a number of first conveying pockets for conveying respective groups of cigarettes and equally spaced along the conveyor belt; reciprocating loading means movable through the hopper outlets to transfer the groups of cigarettes from the outlets into said first conveying pockets; and continuously-operating second conveying means having a number of second conveying pockets movable through a loading station, located along the unloading branch of said first conveying means, to receive the groups of cigarettes from said first conveying pockets.

In the above patent, the second conveying means comprise a further endless conveyor belt, which supports the second conveying pockets equally spaced like the first conveying pockets, and has a respective conveying branch extending through the loading station and alongside the unloading branch so that, during a continuous operating period of the first conveying means, the first and second conveying pockets are aligned to transfer the groups of cigarettes from the first to the second.

The above known packing machine involves several technical drawbacks which eventually seriously impair operation. That is, however well made using technologically advanced materials, the endless conveyor belts are invariably subject, due to wear and changing environmental conditions, to dimensional variations affecting, at times irreparably, the precision with which the first and second conveying pockets are aligned to transfer the groups of cigarettes at the loading station. Moreover, though means are provided for correcting such dimensional variations, the problem is further compounded by the difficulty encountered in restoring optimum operating conditions of two conveying means operating structurally independently of each other.

It is an object of the present invention to provide a machine for packing groups of cigarettes, designed to eliminate the aforementioned drawbacks in a straightforward low-cost manner.

According to the present invention, there is provided a machine for packing groups of cigarettes, the machine comprising a given number of outlets, for respective groups of cigarettes, arranged along a given path; continuously-operating first conveying means having a number of wrapping pockets movable through a loading station located along said path to load said groups of cigarettes; and step-operated second conveying means in turn comprising a conveyor belt interposed between said outlets and said first conveying means to feed the groups of cigarettes to the first conveying means at said loading station; the machine being characterized in that said first conveying means comprise, for said wrapping pockets, a conveying drum mounted for rotation about an axis of rotation; said conveyor belt being looped about said axis of rotation, and comprising two conveying portions movable independently and in phase opposition with respect to each other, and a number of conveying pockets alignable with said wrapping pockets to transfer the groups of cigarettes, and divided into groups of pockets containing a number of conveying pockets equal to said given number of outlets; each conveying portion having a respective succession of groups of pockets alternating with groups of pockets on the other conveying portion.

A non-limiting embodiment of the present invention will be described by way of example with reference to the accompanying drawings, in which:

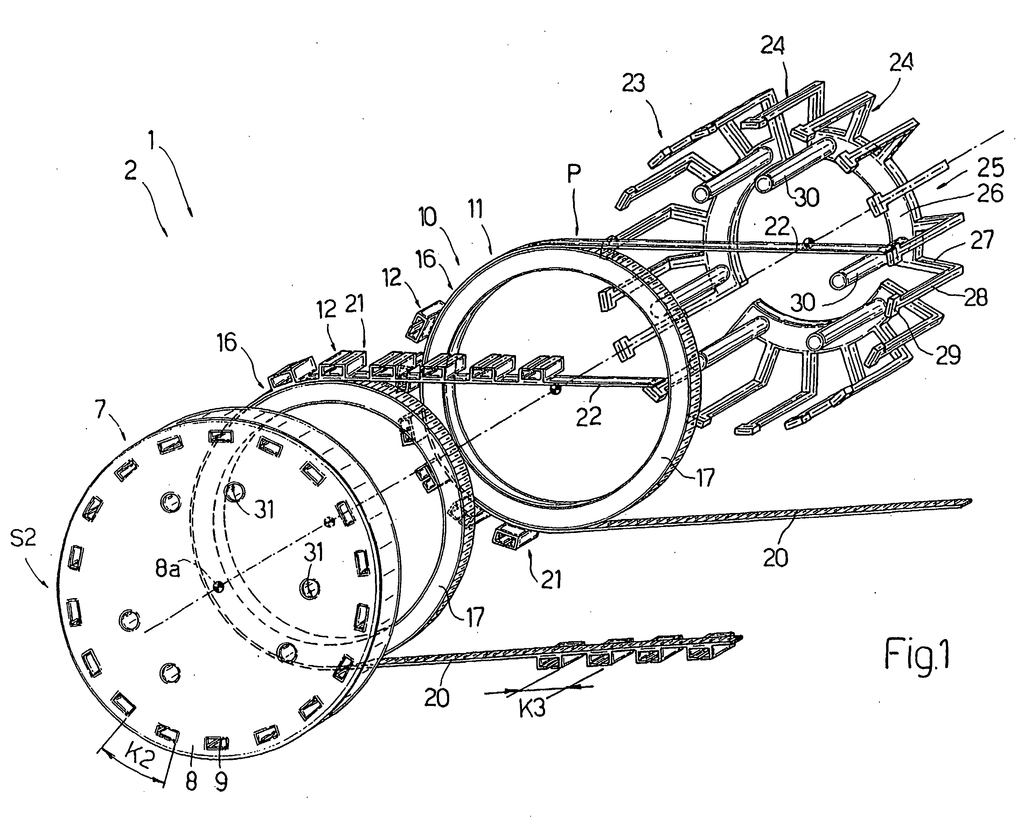

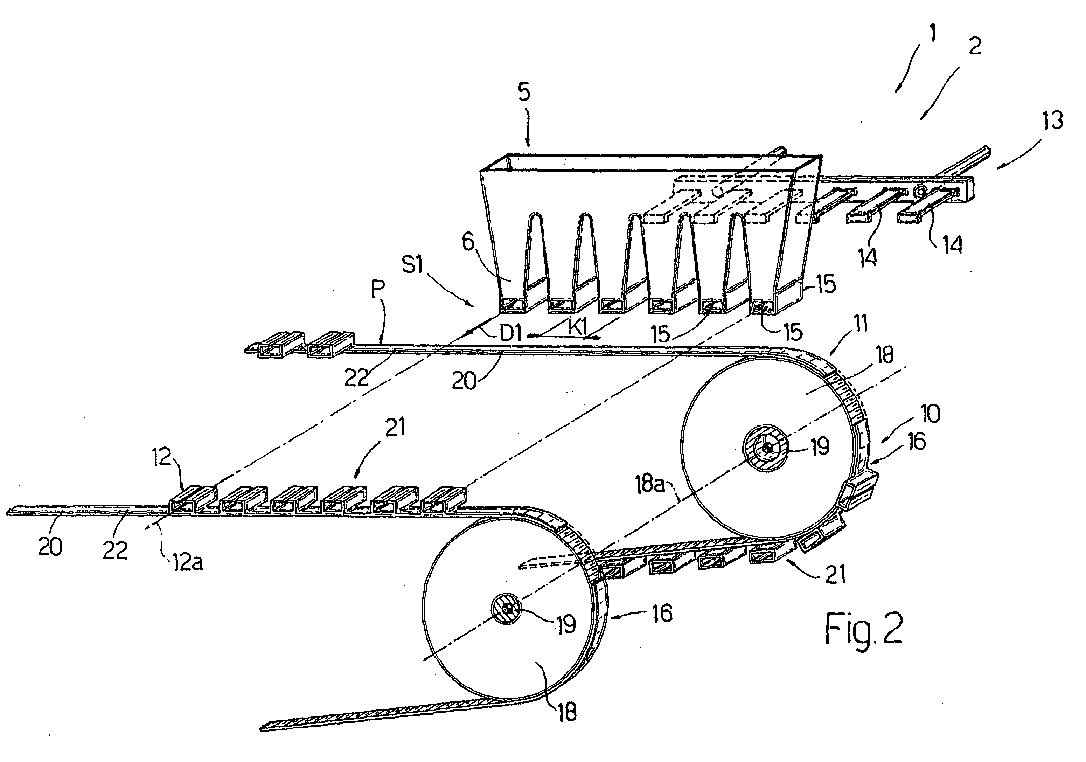

Figures 1 and 2 together show a schematic exploded view in perspective, with parts in section and parts removed for clarity, of a preferred embodiment of a packing machine in accordance with the present invention;

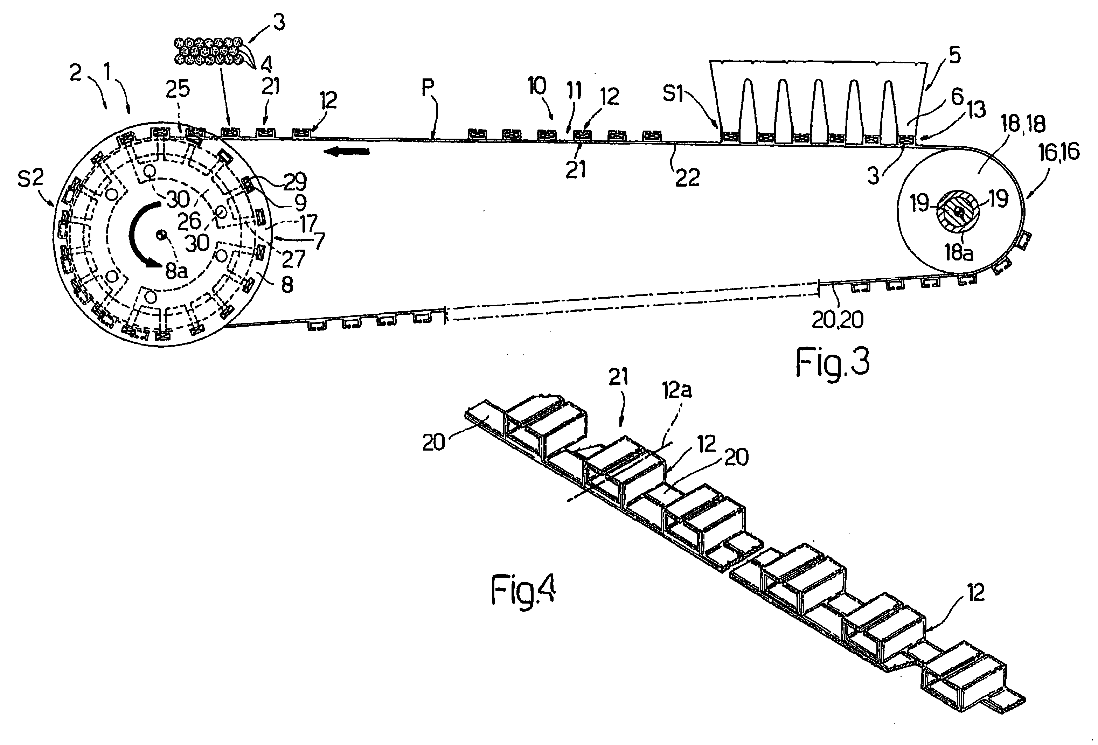

Figure 3 shows a side view, with parts removed for clarity, of the Figure 1 and 2 machine;
Figure 4 shows a larger-scale view in perspective, with parts removed for clarity, of a detail in Figures 1 and 2.

Number 1 in the accompanying drawings indicates an input portion of a machine (indicated as a whole by 2) for packing groups 3 of cigarettes 4 arranged in a five-spot pattern within groups 3.

Portion 1 comprises a hopper 5 containing cigarettes 4 and having, for respective groups 3, a given N1 number of outlets 6 located at a supply station S1 and equally spaced with a spacing K1 along a given path P extending through station S1; and a continuously-operating conveying device 7 located downstream from outlets 6 along path P, and in turn comprising a wrapping drum 8 mounted for rotation about a horizontal axis of rotation 8a, and a number of wrapping pockets 9 equally spaced with a spacing K2 about the periphery of drum 8 and movable through a loading station S2 along path P. Portion 1 also comprises a step-operated conveying device 10, which is interposed between outlets 6 and conveying device 7 to receive groups 3 from outlets 6 and feed groups 3 to conveying device 7, and which in turn comprises a conveyor belt 11 looped about axis of rotation 8a, and a number of conveying pockets 12 having respective longitudinal loading axes 12a parallel to both axis 8a and the expulsion direction D1 of groups 3 from outlets 6.

Portion 1 also comprises an expelling device 13, which moves back and forth in direction D1 through outlets 6 to expel groups 3 from outlets 6 and feed groups 3 to conveying device 10, and which in turn comprises, for each outlet 6, a push member 14 movable back and forth through two aligned vertical openings 15 at the bottom of outlet 6 to longitudinally engage and feed a group 3 into a respective pocket 12 arrested at station S1.

Conveyor belt 11 comprises two conveying portions 16 movable independently and in phase opposition with respect to each other, i.e. activated, as described later on, in respective similar periodic operating cycles offset by a half-cycle; two idle pulleys 17 fitted in rotary manner to a drive shaft (not shown) of drum 8 and coaxial with axis 8a of drum 8; and two drive pulleys 18, which are fitted in rotary manner to respective drive shafts 19 coaxial with each other and with an axis of rotation 18a parallel to axis 8a, and are located along path P, on the opposite side of outlets 6 to pulleys 17.

More specifically, each conveying portion 16 is defined by a toothed belt 20 looped about one of pulleys 17 and one of pulleys 18 to convey a respective succession of conveying pockets 12 divided into groups 21, which each contain a number of pockets 12 equal to the N1 number of outlets 6, and alternate with groups 21 of pockets on the other conveying portion. In each group 21, pockets 12 are equally spaced with a spacing K3 equal to spacing K2 of wrapping pockets 9 and to spacing K1 of outlets 6; and belts 20 are located side by side, with the pockets 12 of each portion 16 half connected to respective belt 20 and half supported in sliding manner on the other belt 20.

On each belt 20, pulleys 17 and 18 define a forward branch 22 extending past outlets 6 along path P; and pulleys 17 are each defined by an annular element with an outside diameter approximately equal to but no larger than the outside diameter of drum 8, so that pockets 12 are aligned with pockets 9 when transferring groups 3 from pockets 12 to pockets 9.

Conveying device 7 also comprises a loading device 23, which is angularly integral with drum 8, is mounted substantially on the opposite side of pulleys 17 to drum 8, and comprises a number of loading elements 24 equally spaced about axis 8a and equal to an N2 number of pockets 9.

Loading elements 24 are divided into an N3 number of loading groups 25, which each comprise a number of elements 24 equal to the N1 number of outlets 6, and define about axis 8a an N2 number of annular sectors defined by respective supporting plates 26 located on the opposite side of pulleys 17 to drum 8 and having, for each loading element 24, a radial arm 27 connected to plate 26, and an axial arm 28 connected to respective arm 27 and extending, parallel to axis 8a, from arm 27 towards drum 8 to support a respective substantially parallelepiped head 29 defining loading element 24 together with arms 27 and 28. Each plate 26 also comprises two cylindrical rods 30, which extend, parallel to axis 8a, through pulleys 17 from respective opposite ends of plate 26, and engage in axially-sliding manner respective through holes 31 formed in drum 8.

Plates 26 are activated selectively and independently of one another by a known actuating device (not shown), and are movable parallel to axis 8a to insert heads 29 inside pockets 12 at transfer station S2 and transfer groups 3 from respective pockets 12 to respective pockets 9 aligned with pockets 12.

In actual use, conveying drum 8 rotates continuously about axis 8a to feed wrapping pockets 9 through station S2 at a given surface speed V1, while conveying device 10, controlled by a known central control unit (not shown), performs an operating cycle comprising, for each conveying portion 16, a stop phase during which respective belt 20 is arrested to load groups 3 from hopper 5, and a transfer phase during which respective belt 20 is advanced at a speed V2 equal to the surface speed V1 of drum 8 to unload groups 3 onto drum 8. More specifically, the two portions 16 move independently and in phase opposition with respect to each other, i.e. as one portion 16 performs the stop phase, the other portion 16 performs the transfer phase.

This will be made clearer in the following description relative to four groups 21 of pockets, indicated 21a, 21b, 21c, 21d, arranged in succession along path P; groups 21a and 21c being integral with one of belts 20 and alternating with groups 21b and 21d integral with the other belt 20. During the stop phase of one of portions 16, the pockets 12 in a first group 21a of portion 16 are arrested, at station S1, facing outlets 6 and aligned with openings 15, and are loaded with groups 3 expelled from outlets 6 by push members 14 moving simultaneously through all of openings 15, while the pockets 12 in the second group 21c of the same portion 16 are substantially located at the input of station S2. The pockets 12 in a first group 21b of the other portion 16, on the other hand, are accelerated, according to a given law of motion, up to speed V2 along the portion of path P between stations S1 and S2, while the pockets 12 in the second group 21d, besides being accelerated with pockets 12 in the first group 21b, are aligned with pockets 9 in direction D1 and engaged by loading elements 24 to transfer respective groups 3 of cigarettes 4 into pockets 9.

The groups 3 loaded onto drum 8 form a continuous succession of groups 3 inside pockets 9 until a known unloading device (not shown) fitted to drum 8 transfers groups 3 from pockets 9 to a known wrapping device.

During transfer of groups 3 of cigarettes 4 from pockets 12 to pockets 9, alignment of pockets 9 and 12 is therefore guaranteed at all times by pockets 9 and, especially, pockets 12 being supported rigidly, throughout the whole of loading station S2, by drum 8 and pulleys 17 respectively. Moreover, being toothed, there is absolutely no danger of belts 20 slipping on pulleys 17, 18; and alternating the operating cycles provides for considerably limiting acceleration of belts 20, with obvious advantages as regards the mechanical members, and with absolutely no reduction in the output of portion 1.

## Claims

1. A machine for packing groups of cigarettes, the machine (2) comprising a given number (N1) of outlets (6), for respective groups (3) of cigarettes (4), arranged along a given path (P); continuously-operating first conveying means (7) having a number of wrapping pockets (9) movable through a loading station (S2) located along said path (P) to load said groups (3) of cigarettes (4); and step-operated second conveying means (10) in turn comprising a conveyor belt (11) interposed between said outlets (6) and said first conveying means (7) to feed the groups (3) of cigarettes (4) to the first conveying means (7) at said loading station (S2); the machine (2) being **characterized in that** said first conveying means (7) comprise, for said wrapping pockets (9), a conveying drum (8) mounted for rotation about an axis of rotation (8a); said conveyor belt (11) being looped about said axis of rotation (8a), and comprising two conveying portions (16) movable independently and in phase opposition with respect to each other, and a number of conveying pockets (12) alignable with said wrapping pockets (9) to transfer the groups (3) of cigarettes (4), and divided into groups of pockets (21) containing a number of conveying pockets (12) equal to said given number (N1) of outlets (6); each conveying portion (16) having a respective succession of groups of pockets (21) alternating with groups of pockets (21) on the other conveying portion (16).

2. A machine as claimed in Claim 1, **characterized in that** each said conveying portion (16) is activated according to a respective operating cycle comprising a stop phase in which the conveying pockets (12) in a respective first group of pockets (21) are aligned with said outlets (6) to receive the groups (3) of cigarettes (4), and a transfer phase in which the conveying pockets (12) in a respective second group of pockets (21) containing respective groups (3) of cigarettes (4) are aligned with said wrapping pockets (9) and travel, together with the wrapping pockets (9), along said loading station (S2).

3. A machine as claimed in Claim 2, **characterized in that** said second conveying means (10) comprise two similar idle pulleys (17) coaxial with said axis of rotation (8a), and two drive pulleys (18); each said conveying portion (16) being defined by a respective belt (20) looped about an idle pulley (17) and a drive pulley (18).

4. A machine as claimed in Claim 3, **characterized in that** the conveying pockets (12) in each said group (21) of conveying pockets (12) are fitted integrally to the belt (20) of the respective conveying portion (16), and are movable with respect to the belt (20) of the other conveying portion (16).

5. A machine as claimed in Claim 3 or 4, **characterized in that** the conveying pockets (12) in each said group (21) of conveying pockets (12) are fitted integrally to the belt (20) of the respective conveying portion (16), and are supported in sliding manner by the belt (20) of the other conveying portion (16).

6. A machine as claimed in any one of the foregoing Claims from 3 to 5, **characterized in that** said first conveying means (7) comprise a number of loading elements (24) angularly integral with said drum (8) and movable axially with respect to the drum (8).

7. A machine as claimed in Claim 6, **characterized in that** said loading elements (24) are divided into groups (25) of loading elements activated selectively at said loading station (S2); each group (25) of loading elements comprising a number of loading elements (24) equal to said given number (N1).

8. A machine as claimed in any one of the foregoing Claims from 1 to 7, **characterized in that** said conveying pockets (12) each comprise a longitudinal loading axis (12a) parallel to said axis of rotation (8a) and to an expulsion direction (D1) of said groups (3) of cigarettes (4) from said outlets (6).

9. A machine as claimed in Claim 8, **characterized in that** said conveying pockets (12) travel along said path (P) transversely to the respective said longitudinal loading axes (12a).

## Patentansprüche

1. Vorrichtung zum Verpacken von Zigarettengruppen, wobei die Vorrichtung (2) eine bestimmte Anzahl N1 Auslässe (6) für entsprechende Gruppen (3) von Zigaretten (4), welche entlang eines bestimmten Pfades (P) angeordnet sind, kontinuierlich angetriebene erste Fördereinrichtungen (7) mit einer Anzahl Umwickeltaschen (9), die durch eine Beladestation (S2) bewegbar sind, die entlang des Pfades (P) angeordnet ist, um die Gruppen (3) von Zigaretten (4) aufzuladen, und schrittweise angetriebene zweite Fördereinrichtungen (10) aufweist, die einen Förderriemen (11) aufweisen, der zwischen den Auslässen (6) und den ersten Fördereinrichtungen (7) eingefügt ist, um die Gruppen (3) von Zigaretten (4) an der Beladestation (S2) zu den ersten Fördereinrichtungen (7) zuzuführen,
**dadurch gekennzeichnet,**
**dass** die ersten Fördereinrichtungen (7) für die Umwickeltaschen (9) eine Fördertrommel (8) aufweisen, die zur Drehung um eine Drehachse (8a) vorgesehen ist, dass der Förderriemen (11) um die Drehachse (8a) herumgewunden ist, und zwei Förderabschnitte (16) aufweist, die voneinander unabhängig und zueinander in Gegenphase bewegbar sind, und eine Anzahl Fördertaschen (12) vorgesehen sind, die mit den Umwickeltaschen (9) in Fluchtung bringbar sind, um die Gruppen (3) von Zigaretten (4) zu übertragen, und die in Gruppen von Taschen (21) unterteilt sind, die eine der bestimmten Anzahl N1 von Auslässen (6) gleiche Anzahl Fördertaschen (12) enthalten, und dass jeder Förderabschnitt (16) eine entsprechende Aufeinanderfolge von Gruppen von Taschen (21) besitzt, die mit Gruppen von Taschen (21) am anderen Förderabschnitt (16) abwechseln.

2. Vorrichtung nach Anspruch 1,
**dadurch gekennzeichnet,**
**dass** jeder Förderabschnitt (16) gemäß seinem entsprechenden Antriebszyklus aktiviert wird, der eine Stoppphase, in der die Fördertaschen (12) in einer entsprechenden ersten Gruppe von Taschen (21) mit den Auslässen (6) fluchten, um die Gruppen (3) von Zigaretten (4) aufzunehmen, und eine Übergabephase aufweist, in der die Fördertaschen (12) in einer entsprechenden zweiten Gruppe von entsprechende Gruppen (3) von Zigaretten (4) enthaltenden Taschen (21) mit den Umwickeltaschen (9) fluchten und sich gemeinsam mit den Umwickeltaschen (9) entlang der Beladestation (S2) vorwärtsbewegen.

3. Vorrichtung nach Anspruch 2,
**dadurch gekennzeichnet,**
**dass** die zweiten Fördereinrichtungen (10) zwei ähnliche, zur Drehachse (8a) koaxiale lose Scheiben (17) und zwei Antriebscheiben (18) aufweisen, wobei jeder Förderabschnitt (16) durch einen entsprechenden Riemen (20) bestimmt ist, der um eine lose Scheibe (17) und um eine Antriebscheibe (18) herumgewunden ist.

4. Vorrichtung nach Anspruch 3,
**dadurch gekennzeichnet,**
**dass** die Fördertaschen (12) in jeder Gruppe (21) von Fördertaschen (12) am Riemen (20) des entsprechenden Förderabschnittes (16) integral angebracht und in Bezug auf den Riemen (20) des anderen Förderabschnittes (16) beweglich sind.

5. Vorrichtung nach Anspruch 3 oder 4,
**dadurch gekennzeichnet,**
**dass** die Fördertaschen (12) in jeder Gruppe (21) von Fördertaschen (12) am Riemen (20) des entsprechende Förderabschnittes (16) integral angebracht sind und durch den Riemen (20) des anderen Förderabschnittes (16) gleitend getragen werden.

6. Vorrichtung nach einem der Ansprüche 3 bis 5,
**dadurch gekennzeichnet,**
**dass** die ersten Fördereinrichtungen (7) eine Anzahl Beladeelemente (24) aufweisen, die winkelig vollständig an der Trommel (8) angeordnet und in Bezug auf die Trommel (8) axial beweglich sind.

7. Vorrichtung nach Anspruch 6,
**dadurch gekennzeichnet,**
**dass** die Beladeelemente (24) in Gruppen (25) unterteilt sind, die an der Beladestation (S2) wahlweise aktiviert werden, wobei jede Gruppe (25) von Beladeelementen eine Anzahl Beladeelemente (24) aufweist, die gleich ist der bestimmten Anzahl (N1).

8. Vorrichtung nach einem der Ansprüche 1 bis 7,
**dadurch gekennzeichnet,**
**dass** jede Fördertasche (12) eine längliche Beladeachse (12a) aufweist, die parallel ist zur Drehachse (8a) und zu einer Ausstoßrichtung (D1) der Gruppen (3) von Zigaretten (4) an den Auslässen (6).

9. Vorrichtung nach Anspruch 8,
**dadurch gekennzeichnet,**
**dass** die Fördertaschen (12) sich entlang des Pfades (P) quer zu den entsprechenden länglichen Beladeachsen (12a) vorwärts bewegen.

## Revendications

1. Machine pour conditionner en paquets des groupes de cigarettes, la machine (2) comprenant un nombre donné (N1) de sorties (6) pour des groupes (3) respectifs de cigarettes (4) disposées le long d'une trajectoire donnée (P) ; un premier moyen transporteur (7) fonctionnant en continu, comportant un nombre de casiers d'empaquetage (9) adaptés à un déplacement à travers un poste de chargement (S2) placé le long de ladite trajectoire (P) pour charger lesdits groupes (3) de cigarettes (4) ; et un deuxième moyen transporteur actionné pas à pas (10) comprenant, à son tour, une bande transporteuse (11) intercalée entre lesdites sorties (5) et ledit premier moyen transporteur (7) pour distribuer les groupes (3) de cigarettes (4) au premier moyen transporteur (7) audit poste de chargement (S2) ; la machine (2) étant **caractérisée en ce que** ledit premier moyen transporteur (7) comprend, pour lesdits casiers d'empaquetage (9), un tambour transporteur (8) monté pour rotation autour d'un axe de rotation (8a) ; ladite bande transporteuse (11) étant enroulée autour dudit axe de rotation (8a), et comprenant deux parties transporteuses (16) mobiles indépendamment et en opposition de phase l'une par rapport à l'autre, et un nombre de casiers transporteurs (12) adaptés à être alignés avec lesdits casiers d'empaquetage (9) pour transférer les groupes (3) de cigarettes (4), et divisés en groupes de casiers (21) contenant un nombre de casiers transporteurs (12) égal audit nombre donné (N1) de sorties (6) ; chaque partie transporteuse (16) comportant une succession respective de groupes de casiers (21) alternant avec des groupes de casiers (21) sur l'autre partie transporteuse (16).

2. Machine selon la revendication 1, **caractérisée en ce que** chaque dite partie transporteuse (16) est actionnée suivant un cycle de fonctionnement respectif comprenant une phase d'arrêt dans laquelle les casiers transporteurs (12), dans un premier groupe respectif de casiers (21), sont alignés avec lesdites sorties (6) pour recevoir les groupes (3) de cigarettes (4), et une phase de transfert dans laquelle les casiers transporteurs (12), dans un deuxième groupe respectif de casiers (21) contenant des groupes respectifs (3) de cigarettes (4), sont alignés avec lesdits casiers d'empaquetage (9) et se déplacent, conjointement aux casiers d'empaquetage (9), le long dudit poste de chargement (S2).

3. Machine selon la revendication 2, **caractérisée en ce que** ledit deuxième moyen transporteur (10) comprend deux poulies folles similaires (17) coaxiales audit axe de rotation (8a), et deux poulies d'entraînement (18) ; chaque dite partie transporteuse (16) étant définie par une bande (20) respective enroulée autour d'une poulie folle (17) et d'une poulie d'entraînement (18).

4. Machine selon la revendication 3, **caractérisée en ce que** les casiers transporteurs (12) dans chaque dit groupe (21) de casiers transporteurs (12) sont fixés d'un seul tenant à la bande (20) de la partie transporteuse (16) respective, et sont adaptés à se déplacer par rapport à la bande (20) de l'autre partie transporteuse (16).

5. Machine selon la revendication 3 ou 4, **caractérisée en ce que** les casiers transporteurs (12) dans chaque dit groupe (21) de casiers transporteurs (12) sont fixés d'un seul tenant à la bande (20) de la partie transporteuse (16) respective, et sont supportés en glissement par la bande (20) de l'autre partie transporteuse (16).

6. Machine selon l'une quelconque des revendications précédentes 3 à 5, **caractérisée en ce que** ledit premier moyen transporteur (7) comprend un nombre d'éléments de chargement (24) d'un seul tenant angulairement avec ledit tambour (8) et adaptés à se déplacer axialement par rapport au tambour (8).

7. Machine selon la revendication 6, **caractérisée en ce que** lesdits éléments de chargement (24) sont divisés en groupes (25) d'éléments de chargement actionnés sélectivement audit poste de chargement (S2) ; chaque groupe (25) d'éléments de chargement comprenant un nombre d'éléments de chargement (24) égal audit nombre donné (N1).

8. Machine selon l'une quelconque des revendications précédentes 1 à 7, **caractérisée en ce que** lesdits casiers transporteurs (12) comprennent chacun un axe de chargement longitudinal (12a) parallèle audit axe de rotation (8a) et à une direction d'expulsion (Dl) desdits groupes (3) de cigarettes (4) desdites sorties (6).

9. Machine selon la revendication 8, **caractérisée en ce que** lesdits casiers transporteurs (12) se déplacent le long de ladite trajectoire (P) transversalement auxdits axes de chargement longitudinaux (12a) respectifs.
